Europäisches Patentamt

(19) European Patent Office

Office européen des brevets

(11) Publication number: **0 145 063**
**B1**

(12) EUROPEAN PATENT SPECIFICATION

(45) Date of publication of patent specification: 15.06.88

(51) Int. Cl.⁴: **H 04 N 7/173,** H 04 N 7/00

(21) Application number: 84201663.6

(22) Date of filing: 16.11.84

(54) Cable television network.

(30) Priority: 18.11.83 NL 8303991

(43) Date of publication of application:
19.06.85 Bulletin 85/25

(45) Publication of the grant of the patent:
15.06.88 Bulletin 88/24

(84) Designated Contracting States:
AT BE CH DE FR GB IT LI LU NL SE

(56) References cited:

13TH INT. TV SYMPOSIUM, SYMPOSIUM
RECORD, CATV SESSIONS, May 28 - June 2,
1983, MONTREUX, (CH). pages 418-430 K.F.
JAMES: "Full channel teletext".

IEEE NATIONAL TELECOMMUNICATIONS
CONFERENCE, December 2-4, 1974, SAN
DIEGO, (US). pages 102-107, IEEE NEW YORK;
(US). W.F. MASON et al.: Interactive
television".

(73) Proprietor: Alcatel N.V.
Strawinskylaan 537
NL-1077 XX Amsterdam (NL)

(72) Inventor: Jongen, Jacobus Johannes H. H.
Johan Huizingastraat 32
NL-2552 MA The Hague (NL)
Inventor: van Weezel, Richard Ronald
Leyweg 1043
NL-2545 HE The Hague (NL)

(74) Representative: van der Beek, George Frans
et al
Nederlandsch Octrooibureau Johan de Wittlaan
15 P.O. Box 29720
NL-2502 LS 's-Gravenhage (NL)

## Description

The invention relates to a cable television network comprising a number of exchanges by means of which the program signals received through a bus line are transmitted through subscriber lines to subscriber stations connected to the respective exchange.

Cable networks of this type are known. It is furthermore known to transmit further information in the form of so called teletext information in addition to the actual television program signals. Within the scope of the teletext, data is transmitted during a number of frame lines not visible onto the screen and not used for normal program transmission of the actual television signal. Said teletext information is divided into pages which as a cyclically repeating series are transmitted together with a page number code. A television receiver adapted for reception of teletext data, comprises a decoder unit in which a predetermined selected page number code can be recognized, as well as a memory in which the picture data corresponding to said page number code can be stored to be displayed thereafter onto the screen of the television receiver.

This system has a number of disadvantages. Each receiver has to be equipped with additional means allowing the reception of teletext signals which results into a significant increase of the price of the receiver. Because of the very restrictd transmission time (each time only a few frame lines in each normal frame) furthermore the number of pages which can be transmitted is very restricted if the waiting time between the selection of a predetermined page by the subscriber and the moment said page becomes visible onto the screen of the receiver has to be maintained within acceptable limits.

It is already proposed, for example in the article by K. F. James: "Full channel teletext" in the Symposium Record of th 13th int. TV Symposium, May 28—June 2, 1983, Montreux (CH), pages 418—430, to use a separate television channel for transmitting exclusively teletext information, modulated in frames of a standard television signal. In that case the number of pages, available within a reasonable waiting period will be extended significantly. On the other hand however the user has to buy a television receiver which is adapted for such a system and furthermore free transmission channels for transmitting additional programs are not always available.

It is now an object of the invention to modify a cable television network in such a way that the subscribers will have access to telext information without the necessity to carry out radical changes in the television receiver or to use specially constructed television receivers.

A further object of the invention is to charge the costs of the teletext service only to the actual users thereof.

Another object of the invention is to give the subscribers access to external data sources of which the information is not contained in the normal telext signal.

A further object of the invention is to adapt the already existing television networks such that they will become suited for transmission of teletext data.

In agreement with said objects the network of the type mentioned in the heading is according to the invention characterized in that at least one of the program signals is a teletext program signal consisting of a cyclically repeating series of a number of coded information pages of arbitrary contents each comprising a page number code and modulated into a number of frame lines of a standard television signal, which pages can be selectively displayed separately into a subscriber station, for which purpose each subscriber station comprises selection means for generating a page selection signal which through the subcriber line is transmitted to a circuit into the exchange, by means of which the pages corresponding to said page selection signal is selected out of the telext program signal, is stored into a memory and said page information continuously modulated as a standard television picture onto the full frames of a standard television signal and transmitted to the subscriber station, from which the page selection signal originated. Therewith the subscriber, connected to such a cable television network gets all teletext information at his disposal without the necessity to buy a special teletext receiver.

Each subscriber who wants to use this teletext service needs therefore, apart from the normal television receiver, only selection means for instance in the form of a key board eventually coupled to transmitting means, to receive the teletext information.

Preferably the cable television network is embodied such that the network is coupled with one or more external information sources, delivering information in page format to a local center in the network comprising means for receiving said information pages and for inserting said pages into the cycle of the mentioned teletext program signal. Because in the system according to the invention the teletext information is transmitted in frames of a standard television signal the number of pages can be considerably increased compared to the number of pages in a standard teletext signal. That offers the possibility to make available further pages for externally delivered information additional to the pages necessary for internally generated data.

Said further pages can be filled with information selected by the management organisation of the cable television network without any influence of the subscriber onto said selection. Preferably however the cable television network is embodied such that the user itself can select for the insertion of certain informations. For that purpose the cable television network according to a preferred embodiment of the invention is characterized in that the selection means in the subscriber stations are adapted for transmitting further selection signals for selecting a predeter-

mined information page of said external information sources, the exchanges comprises means for transmitting said further selection signals to the above mentioned local center in which the selected information page from the external information source is called and inserted together with a momentarily non used page number code into the cycle of the teletext program signal whereafter the page number code of said word is reported back to the exchange, whereafter in said exchange said page is received, the contents thereof is stored in the mentioned memory and thereafter transmitted to the subscriber station from which the further selection signals originated. The advantage of this method is that without any objection further pages can be inserted teletext program signal cycle each time there is a need for such further pages, which further pages can be used for transmitting information in page format from any of the connected information sources to a predetermined subcriber. To guarantee that a subscriber whether or not accidentally selects a page which momentarily contains information destined for another subscriber, it is preferred that page selection signals corresponding to the page number codes of the pages containing information originating from external information sources cannot be generated directly by the selection means into the subscriber station.

Further details of the invention will be discussed in the following description with reference to the annexed drawings.

Fig. 1 illustrates a general schematical survey of the cable television network according to the underlaying invention.

Fig. 2 illustrates a more detailed diagram of some parts of the exchange in Fig. 1.

In this cable television network program signals are delivered by the signal sources 1a, 1b and 1c. Said signal sources can be re-presented by antenna systems, television cameras, video recorders etc. The various program signals delivered by said sources are through the internal connection road 2 in the local center 4 transmitted to the output cable 3. The internal connection road 2 can, for instance comprise amplifyers, modulators, frequency convertors etc, which in a known way are functioning for determining the carrier wave frequency which, as well as the bus line onto which, each of the program signals is transmitted through the cable network. The output lines 3 are connected to the bus 5.

It is remarked that the network can be configurated such that on each of the lines 3 only one television program signal is transmitted. However, it is also possible to transmit on one or more of the lines 3 a number of frequency multiplexed program signals.

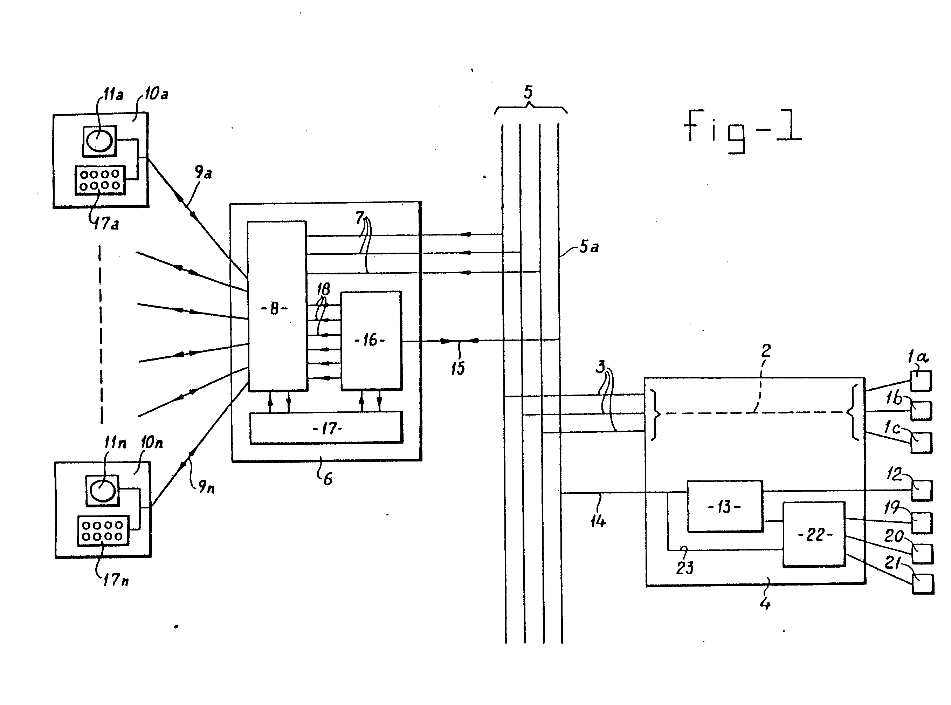

A number of exchanges is connected to the bus 5 and in the Fig. 1 only one of said exchanges is illustrated, indicated by reference number 6. The program signals received from the lines 3 are transmitted through the bus 5 and the branch lines 7 to the switching network 8 and from said switching network 8 the program signals are through the subscriber lines 9a .... 9n transmitted to the subscriber stations 10a ..... 10n. In each of the subscriber stations a television receiver 11a .... 11n is installed.

Additional to the transmission of the normal program signals in this cable television network also a teletext signal is transmitted. The information pages in this teletext signal are for instance delivered by a source 12, which in the figure is illustrated as a single source, but in reality may comprise a number of input stations for generating arbitrary information pages. The way in which this can be realized into practice is considered as known to the expert in this field. The complete pages delivered by means of the source 12 are given a page number code and are sequently modulated onto the frames of a standard television signal by processor 13 and transmitted onto the output line 14. Said output line 14 is connected to line 5a of bus 5 and through said bus 5 and the branch line 15 connected to line 5a the teletext signal is received in the processor 16.

Each of the subcriber stations is equipped with selection means 17a ..... 17m, for instance embodied as a key board with eventually corresponding transmitting means for transmitting selection signals in the form of page number codes. Said page number codes are through the respective subscriber line 9a .... 9n transmitted to the exchange 6, where the received selection signals are splitted off before they reach the switching matrix 8 and are supplied to the processor 17. The processor 17 now controls the processor 16 such that, when the page corresponding to the page number code received from one of the subscribers, is received through the line 15, the contents of said page is stored into one of a series of memories present into the processor 16 or coupled therewith. Said memories are each through one of the lines 18 connected to the switching matrix 8. Thereafter the processor 17 takes care that the subscriber station, which had transmitted the respective page code, becomes through the switching matrix 8 connected to that line 18 which is connected to the memory into which momentarily the requested page is stored.

It is remarked that instead of a switching matrix also other configurations can be used for transmitting the signals from the bus to the subscriber lines. These various possibilities are considered as known to the expert in this field.

Because certainly not all subscriber stations are requesting information out of the teletext signal simultaneously the number of memories in the processor 16 can be significantly smaller than the number of subscriber stations connected to the exchange 6.

In this cable television network according to the invention each subscriber station has furthermore, besides the reception of normal teletext information, the possibility to request further information originating from further information sources, denoted by 19, 20 and 21. These information sources can for instance be represented by external data bases from which data in page format can be called. The traffic between said external information sources 19, 20 and 21 and the local center 4 is controlled by the processor 22. In a not in detail explained procedure the processor 22 is able to retrieve arbitrary information in page format out of each of said external information sources and eventually store said information temporarily into an internal memory or directly transmit said information to the processor 13. The further pages received from the processor 22 are in the processor 13 inserted into the generated cycle together with a momentarily not used page number code. The subscriber who requests reception of a predetermined information page out of one of the external sources 19, 20 or 21 generates the corresponding page selection signal by the selection means 17. This page selection signal is through the subscriber line 9a transmitted to the processor 17. The processor 17 determined on the basis of this page selection signal that the requested page has to be called from an external information source and transmits thereafter the page selection signal through line 15 to the bus line 5a. Through line 14 and line 23 said page selection signal is received into the processor 22. It will be clear that the page selection signal is transmitted using a carrier wave frequency which is sufficiently remote from the carrier wave frequencies which are used for transmitting the teletext signals and/or other signals from the local center 4 to the exchange 6 to avoid eventually mutual disturbances. On the basis of the page selection signal it is determined in the processor 22 in which of the information sources 19, 20 and 21 the related page is stored and subsequently a connection is made to said information source and the related page is called. The page received from the connected source is now supplied to the processor 18 and inserted into the teletext page cycle. The number of the page in said cycle is through the lines 23, 14, 5a and 15 transmitted to the processor 17. Thereafter the processor 17 takes care that, when the related page is received, said page is stored into one of the memories of the processor 16 and subsequently a connection is established through the switching matrix 8 between the corresponding output line 18 and the subscriber line 9 of that subscriber which had requested the information page concerned.

In this way it is therefore possible to give any subscriber access to any information page stored into arbitrary information data bases. The subscriber needs only a selection unit.

If the invention is used into a consisting cable television network then the exchange thereof should be extended with means to make a two way traffic from and to the various parts of the network possible in the above described way.

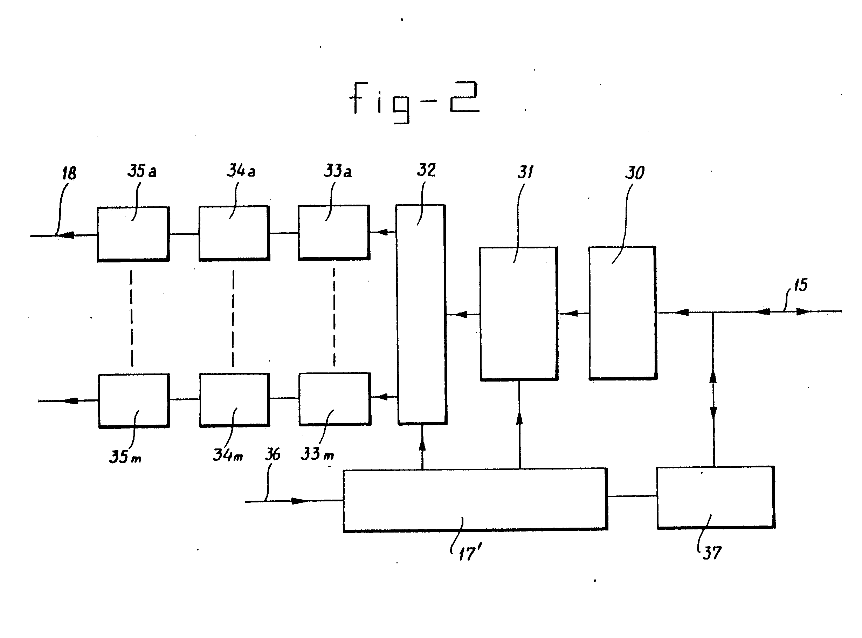

Fig. 2 illustrates more details of the processor 16 as well as part of the processor 17. The teletext information is received through line 15 from the bus 5 and is first of all supplied to the frequency convertor 30 for converting the teletext signal to the base band. It is remarked that this convertor can be omitted in case onto line 15 only the teletext signal is transmitted. The base band signal at the output of the convertor 30 is supplied to the teletext decoder 31. Said decoder 31 is able to select a predetermined page out of the offered video information. Said selection is carried out under control of control signals delivered by the processor part 17'. The selected page is thereafter through the multiplexer 32, also controlled by the processor part 17' supplied to one of the page memories 33a . . . . . 33m. The output of each page memory is coupled to a coder of which the functioning depends on the used television standard, for instance a PAL-coder 34a . . . . . 34m. The outputs of said coders 34a . . . . . 34m are connected each to one of the modulators 35a . . . . . 35m, on the outputs of which the page information, modulated onto a normal television channel frequency, is continuously available to the switching matrix 8 (or the configuration used instead).

Through the line 36 the page selecton signal of the subscriber is received into the processor section 17'. On the basis of this page selection signal either control signals for the teletext decoder 31 and the multiplex 32 are generated directly to retrieve the selected page out of the teletext information signal and to insert said page into one of the memories 33a . . . . . 33m or said page selection signal is transmitted through the coder/decoder 37 to the line 15. In said last mentioned case an information page is requested which should be called from one of the external information sources. As is already indicated above the information concerning the page number in the teletext signal onto which the requested information is transmitted through the local center 4 and the bus 5 to the exchange 6 is reported back through the line 15. Using this page number the teletext decoder 31 and the multiplexer 32 are controlled such that the contents of this page is received into one of the memories 33a . . . . 33m.

It will be clear that the processor 17' keeps track which of the memories 33a . . . . 33m is momentaneously free and can be used for storing a next page contents.

Furthermore the processor 17 can be used for keeping track of the costs which should be accounted for each subscriber for use of telext services. Each time a subscriber requests a teletext information then, for instance dependent onto a a page number, a certain number of cost units will be generated into the processor and supplied to a counter keeping track of the total costs made by the respective subscriber.

## Claims

1. Cable television network comprising a number of exchanges by means of which program signals received through a bus are transmitted through subscriber lines to subscriber stations connected to the respective exhanges characterized in that, at least one of the program signals is a teletext program signal consistig of a cyclically repeating series of a number of coded information pages of arbitrary contents each having a page number code and modulated into a number of frame lines of a standard television signal, which pages can be selectively displayed separately into a subscriber station, for which purpose each subscriber station comprises selection means for generating a page selection signal which through the subscriber line is transmitted to a circuit into the exchange by means of which the page corresponding to said page selection signal is selected out of the teletext program signal, is stored into a memory and thereafter said page information is continuously modulated as a standard television picture onto the full frames of a standard television signal and transmitted to the subscriber station from which the page selection signal originated.

2. Cable television network according to claim 1, characterized in that the network is coupled to one or more external information sources which can supply information in a page format to a local center in the network comprising means for receiving said information pages and for inserting said pages in the cycle of mentioned teletext program signal.

3. Cable television network according to claim 2, characterized in that the selection means in the subscriber stations are adapted for transmitting further selection signals for selecting a predetermined information page of said external information sources, that the local exchanges comprise means for transmitting said further selection signal to the local center for calling the selected information page out of the external information source and for inserting this page together with a momentarily non used page number code into the teletext program signal cycle whereafter the page number code of said page is reported back to the exchange, whereafter in the exchange said page is received and the contents of said page is stored into said memory to be transmitted thereafter to the subscriber station from which the page selection signal originated.

4. Cable television network according to one of the preceding claims 2 or 3, characterized in that page selection signals corresponding to page number codes of the pages in the teletext program signal containing information originating from external information sources cannot be generated directly by the selection means.

5. Cable television network according to one of the preceding claims 2—4, characterized in that each local exchange comprises a teletext decoder for decoding the teletext program signal, a multiplexer which under control of a processor transmits a predetermined information page out of the decoded teletext program signal to one of a number of memories, that each of said memories is connected to an interpretor/ modulator at the output of which the information page contents modulated as a picture frame onto a standard television signal is supplied to the subscriber line.

6. Cable television network according to one of the preceding claims 2—5, characterized in that each each center comprises means for modulating incoming information in page format supplied by internal information supplying means and/or external information sources onto the frame of a standard television program signal.

**Patentansprüche**

1. Kabelfernsehnetz mit einer Anzahl von Vermittlungseinrichtungen zum Aussenden von über einen Bus empfangenen Programmsignalen über Teilnehmeranschlußleitungen zu Teilnehmerstationen, die jeweils mit einer Vermittlungseinrichtung verbunden sind, dadurch gekennzeichnet, daß mindestens eines der Programmsignale ein Teletextprogramm-Signal ist das aus einer sich zyklisch wiederholenden Reihe von mehreren Seiten codierter Information beliebigen Inhalts besteht, wobei jede Seite einen Seitennummer-Code hat und in eine Anzahl von Bildzeilen eines Standard-Fernseh-Signals moduliert wird, daß zum selektiven Wiedergeben der Seiten jede Teilnehmerstation Auswähleinrichtungen zum Erzeugen eines Seiten-Auswählsignals hat, das über die Teilnehmeranschlußleitung zu einer Schaltung in die Vermittlungseinrichtung übertragen wird, daß diese Schaltung die dem Seiten-Auswählsignal entsprechende Seite aus dem Teletextprogramm-Signal auswählt, in einen Speicher einspeichert und danach die Information dieser Seite kontinuierlich als ein Standard-Fernsehbild auf die Vollbilder eines Standard-Fernseh-Signals moduliert und zu der Teilnehmerstation aussendet, von der das Seiten-Auswählsignal stammt.

2. Kabelfernsehnetz nach Anspruch 1, dadurch gekennzeichnet, daß das Netz an eine oder mehrere externe Informationsquellen angeschlossen ist, die Information in einem Seitenformat an ein Zentrum im Netz gibt und daß dieses Zentrum Mittel enthält zum Empfangen dieser Informationsseiten und zum Einfügen dieser Seiten in den Zyklus des Teletextprogramm-Signals.

3. Kabelfernsehnetz nach Anspruch 2, dadurch gekennzeichnet, daß die Auswähleinrichtungen in den Teilnehmerstationen dazu ausgelegt sind, weitere Auswählsignale zum Auswählen einer vorgegebenen Informationsseite aus den externen Informationsquellen auszusenden, daß die Vermittlungseinrichtungen Mittel enthalten zum Senden der weiteren Auswählsignale zum Zentrum, um die ausgewählte Informationsseite aus der externen Informationsquelle abzurufen, und zum Einfügen dieser Seite zusammen mit einem momentan unbenutzten Seitennummer-Code in den Teletextprogramm-Signalzyklus, wonach der Seitennummer-Code dieser Seite der Vermittlungseinrichtung mitgeteilt wird, wonach in der Vermittlungseinrichtung diese Seite empfangen wird und die Inhalte dieser Seite in den Speicher eingespeichert werden, aus dem sie danach zu der Teilnehmerstation übertragen werden, von der das Seiten-Auswählsignal stammt.

4. Kabelfernsehnetz nach Anspruch 2 oder 3, dadurch gekennzeichnet, daß Seitenauswählsignale, die Seitennummer-Codes derjenigen Seiten im Teletextprogramm-Signal entsprechen, die von externen Informationsquellen stammende Information enthalten, nicht direkt durch die Auswählmittel erzeugt werden können.

5. Kabelfernsehnetz nach einem der Ansprüche 2 bis 4, dadurch gekennzeichnet, daß jede Vermittlungseinrichtung einen Teletext-Decoder zum Decodieren des Teletextprogramm-Signals enthält, einen Multiplexer, der, gesteuert von einem Prozessor, eine vorbestimmte Informationsseite aus dem decodierten Teletextprogramm-Signal zu einem von mehreren Speichern sendet, daß jeder der Speicher mit einem Modulator verbunden ist, von dessen Ausgang die Inhalte der informationszeiten moduliert als Bild auf ein Standard-Fernsehsignal auf die Teilnehmeranschlußleitung gelangen.

6. Kabelfernsehnetz nach einem der Ansprüche 2 bis 5, dadurch gekennzeichnet, daß jedes Zentrum Mittel enthhält zum Modulieren von Information, die im Seitenformat von einer internen Informationsquelle und/oder von externen Informationsquellen ankommt, auf die Bilder eines Standard-Fernsehprogrammsignals.

**Revendications**

1. Réseau de télévision sur câbles comprenant plusieurs centraux au moyen desquels des signaux de programmes reçus par un bus sont transmis par des lignes d'abonnés à des postes d'abonnés connectés à des centraux respectifs, caractérisé en ce que au moins un des signaux de programmes est un signal de programme télétexte consistant en une succession cycliquement répétée de plusieurs pages d'information codée au contenu arbitraire, chacun ayant un code de numéro de page et étant modulée sur plusieurs lignes de trames du signal de télévision normalisé, ces pages pouvant être sélectivement affichées, séparément, dans un poste d'abonné et chaque poste d'abonné comprenant à cette fin des moyens de sélection engendrant un signal de sélection de page, lequel est transmis par la ligne d'abonné à un circuit du central, par lequel la page correspondant à ce signal de sélection de page est sélectionnée dans le signal de programme télétexte, pour être enregistrée dans une mémoire, après quoi cette information de page est modulée de façon continuelle comme une image de télévision normalisée, sur les trames complètes du signal de télévision normalisé et transmise au poste d'abonné dont provenait le signal de sélection de page.

2. Réseau de télévision sur câbles conformé à la revendication 1, caractérisé en ce que le réseau est couplé à une ou plusieurs sources d'informations externes qui peuvent fournir de l'information dans un format de page à un centre local du réseau comprenant des moyens pour recevoir lesdites pages d'information et pour insérer ces pages dans le cycle du signal de programme télétexte mentionné.

3. Réseau de télévision sur câbles conforme à la revendication 2, caractérisé en ce que les moyens de sélection dans les postes d'abonnés sont arrangés pour transmettre un signal de sélection additionnel, afin de sélectionner une page d'information prédéterminée desdites sources d'information externes, en ce que les centraux locaux comprennent des moyens pour transmettre ledit signal de sélection additionnel au centre local pour demander la page d'information sélectionnée de la source d'information externe et pour insérer cette page, en même temps qu'un code de numéro de page momentanément non utilisé, dans le cycle du signal de programme de télétexte, après quoi le code de numéro de page de ladite page est signalé au central, de sorte que ladite page soit reçue dans le central et que le contenu de cette page soit enregistré dans ladite mémoire, pour être transmis par la suite au poste d'abonné dont provenait le signal de sélection de page.

4. Réseau de télévision sur câbles conforme à l'une des revendications 2 ou 3, caractérisée en ce que lesdits signaux de sélection de page correspondant à des codes de numéros de pages du signal de programme télétexte contenant de l'information provenant de sources d'information externes ne peuvent pas être engendrés directement par les moyens de sélection.

5. Réseau de télévision sur câbles conforme à l'une quelconque des revendication 2 à 4, caractérisé en ce que chaque central local comprend un décodeur télétexte pour décoder le signal de programme télétexte, un multiplexeur qui, sous la commande d'un processeur, transmet une page d'information prédéterminée d'un signal de programme télétexte décodé à une de plusieurs mémoires et en ce que chacune desdites mémoires est connectée à un modulateur/interpréteur à la sortie duquel le contenu d'une page d'information modulé sous la forme de trames d'images sur un signal de télévision normalisé est fourni à la ligne d'abonné.

6. Réseau de télévision sur câbles conforme à l'une quelconque des revendications 2 à 5, caractérisé en ce que chaque centre comprend des moyens pour moduler l'information entrante dans le format de pages fournies par des moyens de fourniture d'information internes et/ou des sources d'information externes, sur des trames d'un signal de programme de télévision normalisé.

Fig-1

0 145 063

fig-2